# EUROPEAN PATENT SPECIFICATION

(11) **EP 0 732 993 B1**
(45) Date of publication and mention of the grant of the patent: **18.04.2001**
(21) Application number: 95903697.1
(22) Date of filing: 09.12.1994
(51) Int. Cl.: B32B 27/08, B32B 33/00, B32B 7/12, B32B 13/12, B32B 9/04

(54) **RELEASE FILM FOR LABEL STOCK**
TRENNFOLIEN FÜR HAFTETIKETTEN
FILM PROTECTEUR DETACHABLE POUR ETIQUETTES ADHESIVES

(30) Priority: 09.12.1993 US 164242
(43) Date of publication of application: 25.09.1996
(73) Proprietor: MOBIL OIL CORPORATION, Fairfax, Virginia 22037-0001 (US)
(72) Inventor: ALL, Frank, Edward, Newark, NY 14513 (US); KONG, Dancheng, Fairport, NY 14450 (US); MUSCLOW, Gordon, Leonard, Henrietta, NY 14467 (US); WILLIAMS, David, Randall, Fairport, NY 14450 (US)
(74) Representative: Samuels, Lucy Alice
(86) International application number: US9414147
(87) International publication number: WO9515850

(56) References cited:
- EP-A- 0 115 940
- WO-A-93/11933
- US-A- 4 536 441
- US-A- 5 232 784
- US-A- 5 248 535
- DATABASE WPI Derwent Publications Ltd., London, GB; AN 85-156370 XP002012268 & JP-A-60 088 049 (TORAY) , 17 May 1985

## Description

The present invention relates to a release film, a major utility of which is to protect and carry label stock until the label is put into use on an appropriate surface.

For many years labels have been prepared with an adhesive applied to one side thereof. In instances where the adhesive is a pressure sensitive adhesive, some means had to be provided to protect the adhesive surface in advance of applying the label to the ultimate surface to be labeled. A technique has evolved over the years by which the pressure sensitive adhesive is protected by bringing the adhesive surface into contact with a release layer which has little tendency to aggressively adhere to the pressure sensitive adhesive surface. Thus, a second film having a release surface is brought into contact with the pressure sensitive surface carried by the label protecting the pressure sensitive adhesive until the label is applied to its ultimate surface. It is to be understood that the pressure sensitive adhesive can be applied to the release surface and the label stock thereafter applied to the adhesive surface. On removal of the label the pressure sensitive adhesive will preferentially adhere to the label stock.

Release films are often manufactured apart from the label face stock. The release film is manufactured by applying a commercially available release material to one side of the release film and the combination is then convolutely wound into a roll stock. Ultimately this roll stock must be unrolled and slit to a width dimension suited to a particular label dimension. Next a pressure sensitive layer is applied over the release layer and this is mated with the underside of a sheet of label stock. Alternatively the label stock can have the pressure sensitive adhesive applied to its undersurface which in turn is mated with the release label. Following this, label indicia are printed onto the surface of the label which is thereafter die cut so that it can be separated from the release sheet-label stock combination.

Suitable films for use in these applications include polyethylene terephthalate (PET) and biaxially oriented polypropylene (BOPP). Conventional BOPP liners, while exhibiting cost advantages over polyethylene terephthalate can experience problems due to poor printing registration during label converting and a lack of support during die cutting procedures.

It is an object of the present invention to present a release film which is capable of being cleanly cut by a die at high velocity operation, e.g., at 152.40 m (500 feet) per minute or greater. Another object of the invention is to provide a release film which is capable of less elongation under tension and excellent printing registration during label converting. Moreover, it is an object of the invention to provide a release film of high thermal stability, an advantage of particular importance where the silicone release agent is thermally cured.

The present invention relates to a film which comprises a film substrate having on at least one side thereof a coating of a silicone release material wherein the film substrate comprises an oriented high crystallinity polypropylene (HCPP) having intermolecular steroregularity greater than 93% as determined by IR spectroscopy.

This invention also relates to the use of a film of this invention as a release film for label stock.

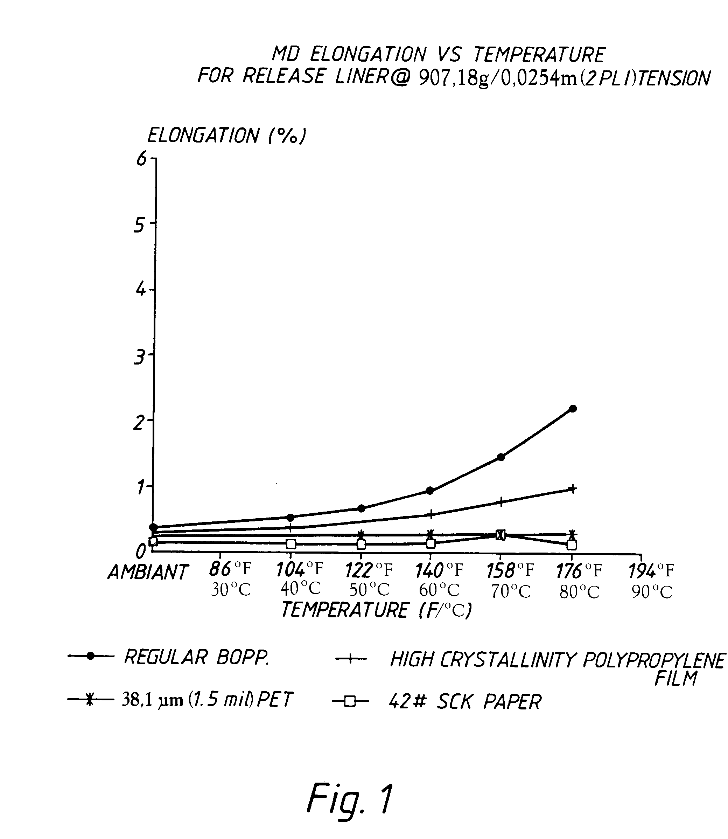

Figure 1 depicts elongation (%) at 907.18 g/0,0254 m (2 PLI (pounds per linear inch)) tension in machine direction (MD) over temperature (°F, °C) for release liners of the present invention (biaxially oriented HCPP) and release liners of conventional (lower crystallinity) BOPP, 38,1 µm (1.5 mil) polyethylene terephthalate (PET) and 42# SCK (super calendered Kraft) paper.

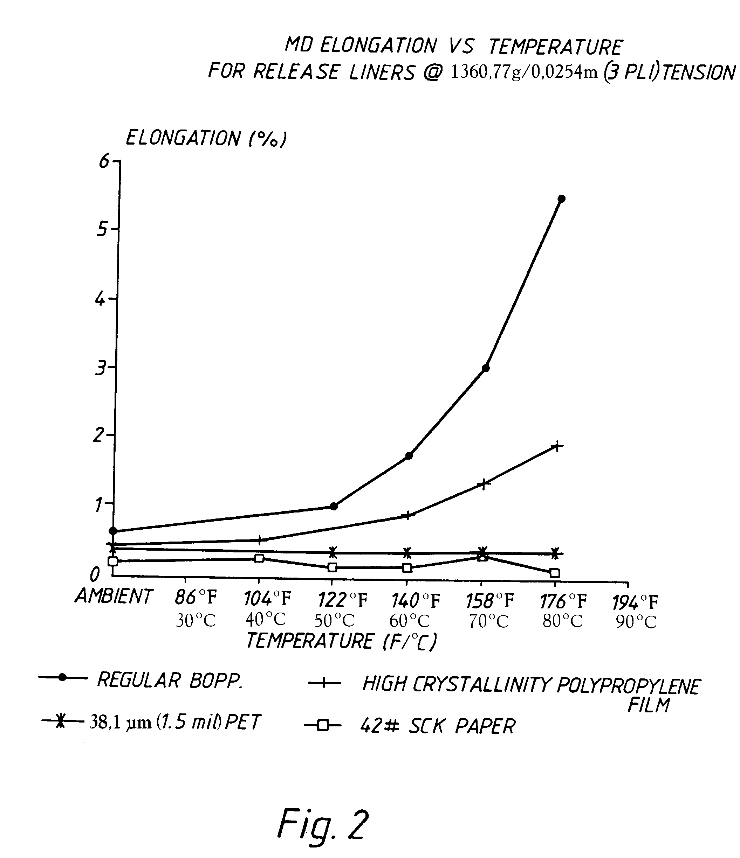

Figure 2 depicts elongation (%) at 1360,77 g/0,0254 m (3 PLI) tension in machine direction (MD) over temperature (°F, °C) for release liners of the present invention (biaxially oriented HCPP) and release liners of conventional (lower crystallinity) BOPP, 38,1 µm (1.5 mil) polyethylene terephthalate (PET) and 42# SCK paper.

In preparing the release film of the present invention the substrate can be derived from an oriented high crystallinity polypropylene (HCPP) having intermolecular steroregularity greater than 93%, preferably from 94 to 99%, more preferably from 94 to 98%, as determined by IR spectroscopy. Suitable high crystallinity polypropylene (HCPP) resins (film grade) include Amoco 9117 and Amoco 9119, available from Amoco Chemical Co. of Chicago, IL; Chisso HF5010 and Chisso XF2805, available from Chisso Chemical Co., Ltd. of Tokyo, Japan; Himont 7054, available from Himont U.S.A., Inc. of Wilmington, DE; and Exxon SP301 and SP 303, available from Exxon Chemical Co. of Houston, TX. The high crystallinity polypropylene has a higher intermolecular steroregularity giving an increase in isotactic polymers and decrease in atactic and syndiotactic polymers. HCPP exhibits higher crystallinity than conventional polymers resulting in higher stiffness, surface hardness, lower deflection at higher temperatures and better creep properties. Further information relating to HCPP, including methods for preparation of the resin is disclosed in US 5,063,264.

For purposes of the present invention, intermolecular steroregularity can be determined by IR spectroscopy according to the procedure set out in "Integrated Infrared Band Intensity Measurement of Stereoregularity in Polypropylene," J. L. Koenig and A. Van Roggen, Journal of Applied Polymer Science, Vol. 9, pp. 359-367 (1965) and in Chemical Microstructure of Polymer Chains, Jack L. Koenig, Wiley-Interscience Publication, John Wiley and Sons, New York, Chichester, Brisbane, Toronto.

This substrate material can, in turn, be composed of one or a plurality of individual layers designed to improve the overall quality of the substrate. The substrate can be transparent or opaque. In one embodiment, the HCPP can be coextruded with another suitable polyolefin. Suitable individual layers which can be employed to prepare multilayer release substrates include polyolefins other than HCPP, e.g. one or more of polypropylene homopolymer, ethylene-propylene copolymer, and high density polyethylene (HDPE).

Any release material effective for use in protecting the back side of label stock prior to label application is contemplated for use in the present invention, e.g., silicones. A particularly preferred class of release materials are those broadly identified as "silicone acrylate" release materials. A description of these materials and how they are made are found in US 4,678,846 and US 4,306,050.

The release material of the present invention can include (meth)acrylate ester modified organopolysiloxane mixtures, comprising essentially equilibrated organopolysiloxanes with, on the average, more than 25 to fewer than 200 silicone atoms and which additionally contain 2 to 30 weight percent of organopolysiloxanes with, on the average, 2 to 25 silicone atoms and 2 to 30 weight percent of organopolysiloxanes with, on the average, 200 to 2,000 silicone atoms.

As used herein, the organopolysiloxane fractions having more than 25 to less than 200 silicone atoms are sometimes referred to as the first fraction, those having 2 to 25 silicone atoms are referred to as the second fraction, and those having 200 to 2,000 silicone atoms are referred to as the third fraction.

Especially preferred are those (meth)acrylate ester modified organopolysiloxane mixtures which contain, besides the essentially equilibrated organopolysiloxane with, on the average, more than 25 to fewer than 200 silicone atoms, 5 to 20 weight percent of organopolysiloxanes with, on the average, 5 to 25 silicone atoms and 5 to 20 weight percent of organopolysiloxanes with, on the average, 200 to 2,000 silicone atoms.

The organopolysiloxanes contained in the organpolysiloxane mixtures preferably correspond to the formula: 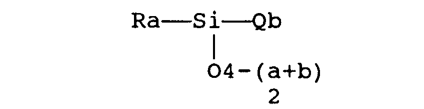 in which R is an alkyl radical with 1 to 4 carbon atoms, preferably, the methyl radical. R may, however, also be a vinyl or phenyl radical. Moreover, the R radical may also represent different moieties in the molecule, so that some R radicals represent methyl radicals and the other R radicals may, for example, represent a vinyl or a phenyl radical. Preferably, at least 90% of the R radicals are alkyl radicals, especially methyl radicals.

Q is an organic radical which contains the acrylate or methacrylate ester groups. Preferably, the acrylate or methacrylate ester radical is linked to the silicone atom through an SiOC bridge. The acrylate or methacrylate radical may moreover be derived from pentaerythritol triacrylate, pentaerythritol trimethacrylate, dipentaerythritol pentaacrylate, dipentaerythritol pentamethacrylate, ditrimethylolpropane triacrylate, ditrimethylolpropane trimethacrylate, ditrimethylolethane triacrylate, ditrimethylolethane trimethacrylate, trimethylolpropane di(meth)acrylate, trimethylolethane di(meth)acrylate, glycerin di(meth)acrylate, hydroxyethyl acrylate, hydroxpropyl acrylate and neopentyl glycol monoacrylate.

The acrylate or methacrylate ester radical may, however, also be linked through an SiC bridge with the organopolysiloxane.
a has a value of 1.0 to 2.2; b has a value of 0.001 to 1.6. The fractions of different average molecule weight contained in the inventive acrylate or methacrylate ester modified organopolysiloxane mixtures may differ in respect to the R and Q radicals and the a and b subscripts.

Organosilicone species in the above-referenced silicone acrylate release coatings are believed to migrate from the coating to adjacent contacting surfaces. The cause of this migration may be nonfunctionalized silicone remaining in the release coating. These migratable species are not bound or fixed in the cured coating and thus will migrate to adjacent contacting surfaces. US 5,232,784 teaches that by including a quaternary ammonium salt in the silicone acrylate material prior to applying it to the release substrate that by some reaction the migratable material is either prevented from migrating or converted to a material which has no adverse effect on label printing. US 4,933,124 describes a process of applying silicone release coating to oriented polymer film which is suitable for use in the present invention.

The silicone release coating normally is applied to the substrate in a quantity of from about 0.2-1.2 grams/0,0645 m² (1000 in2), preferably about 0.7 g/0,0645 m² (1000 in2). After application the silicone release coating can be subjected to a conventional curing process, depending on the type of silicone release coating used, e.g., thermal, ultraviolet, or electron beam radiation.

The substrate can be of any suitable thickness, say from 11,43 to 254,0 µm (0.45 to 10 mils) thick, say 25,4 to 55,88 µm (1 to 2.2 mils), after coating. The use of HCPP in the substrate provides films of reduced thicknesses, even below 25,4 µm (1 mil), e.g., 11,43 to 25,40 µm (0.45 to 1 mil), than are obtainable with conventional polypropylenes of reduced crystallinity.

The film can be oriented prior to application of the silicone release coating either uniaxially or biaxially. Preferably the film is biaxially oriented prior to said application. Uniaxially oriented film can be stretched 4 to 10 times, preferably 5 to 6 times. Biaxially oriented film can be stretched 4 to 8 times, preferably 4.5 to 6 in the machine direction (MD), and 6 to 10 times, preferably 7 to 8 times in the transverse direction (TD).

After the silicone release material is applied to one side of the high crystallinity BOPP film, the combination can then be convolutely wound into a roll stock. Ultimately this roll stock can be unrolled and slit to a width dimension suited to a particular label dimension. In one embodiment, a pressure sensitive adhesive layer is applied over the release layer which can be mated to the underside of a sheet of label stock. Alternatively, the label stock can have the pressure sensitive adhesive applied to its undersurface which in turn is mated with the release label. Following this, label indicia are printed onto the surface of label and the label then can be die cut so that it can be separated from the release sheet-label stock combination.

The pressure sensitive adhesive is any suitable pressure sensitive adhesive, e.g., emulsion-based, solvent- based, or hot melt PSAs. Suitable emulsion-based acrylics include: Nacor 4525 and Nacor 4544, available from National Starch and Chemical Corp. of Bridgewater, NJ, LC-31 and GP-2, available from Air Products and Chemicals, Inc. of Allentown, PA, PS-60 and PS-51 available from Rohm and Haas Co. of Philadelphia, PA. Suitable solvent-based PSAs include: GMS 263 and GMS 250, available from Monsanto Co. of St. Louis, MO. Suitable hot melt PSAs include Duro-Tak 4138 and Duro-Tak 4134, available from National Starch and Chemical Corp. of Bridgewater, NJ.

The label stock can be of any suitable material including paper or thermoplastic films, e.g., polyethylenes, polyethylene terephthalate (PET), polypropylene, e.g., biaxially oriented polypropylene (BOPP). In particular, the use of high crystallinity oriented polypropylene is contemplated as a label stock for use in the present invention, especially oriented material, e.g., biaxially oriented high crystallinity polypropylene. The high crystallinity BOPP is particularly suited to use as label stock in applications where the labels are die-cut labels or sheet labels owing to the enhanced stiffness of HCPP.

The following Examples illustrate the invention. EXAMPLES 1 AND 2 Preparation of HCPP Release Liners 54,80 µm (2.0 mil) release liner film of the present invention was obtained using high crystallinity polypropylene Amoco 9119 having a steroregularity of 96% as measured by IR spectroscopy (or m-pentad of 94% as measured by NMR spectroscopy) was melted in an extruder to provide a film of 2,463 mm (97 mil) thickness which was oriented in the machine direction 5.4 times and in the transverse direction 9 times, to provide a 50,80 µm (2 mil) film which was then coated with 0.6 g/0,645 m² (1000in²) of an electron beam curable silicone release agent, Silicone-Acrylate, available from T. H. Goldschmidt AG of Essen, Germany. The release liner containing the silicone release agent was then subjected to electron beam cure. The resulting release liner was tested for machine direction elongation over temperature at 907,18g/0,0254m and 1360,77g/0,0254m (2 PLI and 3 PLI) tension and the results are set out in Figures 1 and 2, respectively.

The resultant release liner was then laminated to polyethylene teraphthalate (PET) OR polyethylene (PE) facestocks using GP-2, an acrylic emulsion PSA available from Air Products Co. of Philadelphia, PA.

The resulting release liner/adhesive/facestock composites had a label facestock of polyethylene terephthalate (PET--Example 1) and polyethylene (PE--Example 2). The composites were die-cut with a die having a die gap of 45,72 µm (1.8 mils) and subjected to label converting operation at 152,40 m (500 feet) per minute (FPM). Unlike conventional BOPP liners, the high crystallinity BOPP liners were also able to maintain 1/64" printing registration in the label press. The results set out in the Table below show that the HCPP-based film performed well at levels above conventional BOPP-based film. High crystallinity BOPP liner provide better support for die-cutting and label conversion procedures.

### EXAMPLES 3 TO 8 (COMPARATIVE)

Conventional release films were made from conventional, lower crystallinity BOPP (Examples 3 to 6), 42# SCK (super calendered kraft) paper (Example 7) and 38,10 µm (1.5 mil) polyethylene terephthalate (PET) (Example 8). Examples 3 to 7 were used to make release liner/adhesive/facestock composites using a label facestock of polyethylene terephthalate (PET--Examples 3,5,6, and 7) and polyethylene (PE--Example 4). Examples 3 and 4 were made from a conventional BOPP coextruded film with electron beam curable silicone coating. Examples 5 and 6 were made from conventional BOPP film with electron beam curable silicone coating available from T. H. Goldschmidt AG. Example 7 was made from 50# SCK paper release liner. The composites were die-cut with dies having a die gap of 40,64 to 50,8 µm (1.6 to 2.0 mils) and subjected to label converting operation at the same conditions as in Examples 1 and 2. Further details are provided in the Table.

**TABLE**

| EX. | LINER/PSA/FACESTOCK | LINER GA. | DIE GAP | COMMENT |
|---|---|---|---|---|
| 1 | HCPP/GP-2/PET | 50,8 µm (2.0 mil) | 45,72 µm (1.8 mil) | Die-cut well Label conv.at (500 ft)/min 152,40 m |
| 2 | HCPP/GP-2/PE | " " | " " | " " |
| 3 | BOPP/GP-2/PET | " " | 40,64 µm (1.6 mil) | Did not cut cleanly |
| 4 | BOPP/GP-2/PE | " " | " " | " " |
| 5 | BOPP/GP-2/PET | " " | 45,72 µm (1.8 mil) | " " |
| 6 | BOPP/GP-2/PET | " " | 40,64 µm (1.6 mil) | Die-cut well Label conv. at (500 ft)/min. 152,40 m |
| 7 | 50#SCK/GP-2/PET | 68,58 µm (2.7 mil) | 50,8 µm (2.0 mil) | " " |

Example 8 was a release liner similar to the others in the Examples but having a substrate of 38,10 µm (1.5 mil) polyethylene terephthalate (PET).

Figures 1 and 2 depict elongation (%) at 907,18g/0,0254m and 1360,77g/0,0254m (2 and 3 PLI) (pounds per linear inch), respectively, in machine direction (MD) over temperature (°F/°C) for release liners of the present invention and the comparative Examples.

## Claims

1. A film which comprises:
(i) a substrate having on at least one side thereof
(ii) a coating of a silicone release material,
wherein the substrate comprises an oriented high crystallinitypolypropylene (HCPP) having intermolecular stereoregularity greater than 93% as determined by IR spectroscopy.

2. A film according to claim 1 wherein the HCPP has an IR stereoregularity ranging from 94% to 98%.

3. A film according to claim 1 or 2 which is uniaxially or biaxially oriented.

4. A film according to claim 3 which is uniaxially oriented from 4 to 10 times.

5. A film according to any of claims 1 to 4 which is oriented from 4 to 8 times in the machine direction (MD).

6. A film according to any of claims 1 to 5 which is oriented from 6 to 10 times in the transverse direction (TD).

7. A film according to any preceding claim wherein the substrate (i) comprises HCPP coextruded with a polyolefin other than HCPP.

8. A film according to claim 7 wherein the polyolefin comprises polypropylene homopolymer, ethylene-propylene copolymer, or high density polyethylene (HDPE).

9. A film according to any preceding claim wherein the coating of a silicone release material (ii) is cured by electron beam radiation; by thermal radiation; by ultraviolet radiation.

10. A film according to any preceding claim wherein the HCPP has a stereoregularity as measured by m-pentad of at least 94% as measured by NMR spectroscopy.

11. A film which comprises :
(i) a substrate having on at least one side thereof
(ii) a coating of a silicone release material,
wherein the substrate comprises an oriented high crystallinity polypropylene (HCPP) having stereoregularity as measured by m-pentad of at least 94% as measured by NMR spectroscopy.

12. A film according to claim 11 having any of the features recited in claims 2 to 9.

13. Use of a film according to any preceding claim as a release film for label stock.

## Patentansprüche

1. Folie, die:
(i) ein Substrat umfaßt, das auf wenigstens einer Seite davon
(ii) eine Beschichtung aus einem Silikon-Trennmaterial aufweist,
wobei das Substrat ein orientiertes Polypropylen mit hoher Kristallinität (HCPP) umfaßt, das eine größere intermolekulare Stereoregularität, gemessen durch IR-Spektroskopie, als 93 % aufweist.

2. Folie gemäß Anspruch 1, dadurch gekennzeichnet, daß das HCPP eine IR-Stereoregularität im Bereich von 94 % bis 98 % aufweist.

3. Folie gemäß Anspruch 1 oder 2, dadurch gekennzeichnet, daß sie uniaxial oder biaxial orientiert ist.

4. Folie gemäß Anspruch 3, dadurch gekennzeichnet, daß sie 4 bis 10fach uniaxial orientiert ist.

5. Folie gemäß jedem der Ansprüche 1 bis 4, dadurch gekennzeichnet, daß sie 4 bis 8fach in Laufrichtung (MD) orientiert ist.

6. Folie gemäß jedem der Ansprüche 1 bis 5, dadurch gekennzeichnet, daß sie 6 bis 10fach in Querrichtung (TD) orientiert ist.

7. Folie gemäß jedem vorstehenden Anspruch, dadurch gekennzeichnet, daß das Substrat (i) HCPP umfaßt, das mit einem anderen Polyolefin als HCPP coextrudiert wurde.

8. Folie gemäß Anspruch 7, dadurch gekennzeichnet, daß das Polyolefm Polypropylen-Homopolymer, Ethylen-Polypropylen-Copolymer oder Polyethylen mit hoher Dichte (HDPE) umfaßt.

9. Folie gemäß jedem vorstehenden Anspruch, dadurch gekennzeichnet, daß die Beschichtung aus einem Silikon-Trennmaterial (ii) durch Elektronenbestrahlung, durch thermische Bestrahlung, durch ultraviolette Strahlung gehärtet ist.

10. Folie gemäß jedem vorstehenden Anspruch, dadurch gekennzeichnet, daß das HCPP eine Stereoregularität, gemessen mittels m-Pentad, von wenigstens 94 %, gemessen durch NMR-Spektroskopie, aufweist.

11. Folie, die:
(i) ein Substrat umfaßt, das auf wenigstens einer Seite davon
(ii) eine Beschichtung aus einem Silikon-Trennmaterial aufweist,
wobei das Substrat ein orientiertes Polypropylen mit hoher Kristallinität (HCPP) umfaßt, das eine Stereoregularität, gemessen mittels m-Pentad, von wenigstens 94 %, gemessen durch NMR-Spektroskopie, aufweist.

12. Folie gemäß Anspruch 11, dadurch gekennzeichnet, daß sie jedes der in den Ansprüchen 2 bis 9 dargelegten Merkmale aufweist.

13. Verwendung eines Films gemäß jedem vorstehenden Anspruch als Trennfolie für Haftetiketten.

## Revendications

1. Un film qui comprend :
(i) un substrat comportant sur au moins une de ses faces,
(ii) un revêtement de substance anti-adhérente siliconée,
dans lequel le substrat comprend du polypropylène de haute cristallinité orienté (HCPP) ayant une stéréorégularité intermoléculaire supérieure à 93 % d'après la spectroscopie IR.

2. Un film selon la revendication 1, dans lequel le HCPP a une stéréorégularité par IR de 94 % à 98 %.

3. Un film selon la revendication 1 ou 2, qui est orienté uniaxialement ou biaxialement.

4. Un film selon la revendication 3, qui est orienté uniaxialement de 4 à 10 fois.

5. Un film selon l'une quelconque des revendications 1 à 4, qui est orienté de 4 à 10 fois dans le sens machine (MD).

6. Un film selon l'une quelconque des revendications 1 à 5, qui est orienté de 6 à 10 fois dans le sens transverse (TD).

7. Un film selon l'une quelconque des revendications précédentes, dans lequel le substrat (i) comprend un HCPP coextrudé avec une polyoléfine autre qu'une HCPP.

8. Un film selon la revendication 7, dans lequel la polyoléfine comprend un homopolymère de polypropylène, un copolymère éthylène-propylène ou un polyéthylène haute densité (HDPE).

9. Un film selon l'une quelconque des revendications précédentes, dans lequel le revêtement de substance anti-adhérente siliconée (ii) est réticulé par rayonnement de faisceau électronique, par rayonnement thermique ou par rayonnement ultraviolet.

10. Un film selon l'une quelconque des revendications précédentes, dans lequel le HCPP a une stéréorégularité, mesurée par les m-pentad, d'au moins 94 % d'après la mesure par spectroscopie RMN.

11. Un film qui comprend :
(i) un substrat comportant sur au moins une de ses faces,
(ii) un revêtement d'une substance anti-adhérente siliconée,
dans lequel le substrat comprend du polypropylène de haute cristallinité orienté (HCPP) ayant une stéréorégularité, mesurée par les m-pentad, d'au moins 94 % d'après la mesure par spectroscopie RMN.

12. Un film selon la revendication 11, ayant l'une quelconque des caractéristiques indiquées dans les revendications 2 à 9.

13. Utilisation d'un film selon l'une quelconque des revendications précédentes comme film anti-adhérent pour étiquettes adhésives.
